# EUROPEAN PATENT SPECIFICATION

(11) **EP 4 374 755 B1**
(45) Date of publication and mention of the grant of the patent: **29.04.2026**
(21) Application number: 22844977.3
(22) Date of filing: 25.05.2022
(51) Int. Cl.: A47J 43/00, B65D 85/00, B65D 1/04, B65D 25/00, B65D 23/04, B65D 25/56, B65D 85/72

(54) **UNBLENDED LIQUOR AND ASSEMBLY CONVENIENT FOR LIQUOR MIXING, AND LIQUOR MIXING METHOD FOR IMPROVING LIQUOR TASTING CULTURE**
UNVERDÜNNTE SPIRITUOSEN UND ANORDNUNG ZUM MISCHEN VON SPIRITUOSEN, SOWIE EINE METHODE ZUM MISCHEN VON SPIRITUOSEN ZUR VERBESSERUNG DER SPIRITUOSENVERKOSTUNGSKULTUR.
ALCOOL NON MÉLANGÉ ET ENSEMBLE PRATIQUE POUR LE MÉLANGE D'ALCOOL ET PROCÉDÉ DE MÉLANGE D'ALCOOL POUR AMÉLIORER LA CULTURE DE LA DÉGUSTATION D'ALCOOL

(30) Priority: 20.07.2021 CN 202110817885
(43) Date of publication of application: 29.05.2024
(73) Proprietor: Zhejiang Geely Holding Group Co., Ltd., Hangzhou, Zhejiang 310051 (CN)
(72) Inventor: LI, Shufu, Hangzhou, Zhejiang 310051 (CN)
(74) Representative: Zaboliene, Reda
(86) International application number: PCT/CN2022/094946
(87) International publication number: WO 2023/000810

(56) References cited:
- AU-A4- 2018 101 448
- CN-A- 103 903 150
- CN-A- 103 903 150
- CN-A- 105 579 204
- CN-A- 113 697 230
- CN-U- 203 767 329
- CN-U- 206 371 943
- CN-U- 212 474 461
- CN-U- 215 972 571
- JP-U- 3 211 434
- KR-A- 20110 044 461
- US-A- 2 236 368
- US-A1- 2015 056 332

## Description

### TECHNICAL FIELD

The present application relates to the technical field of liquor sets, and in particular to a raw liquor package and a raw liquor package assembly convenient for liquor mixing, and a liquor mixing method using the raw liquor package assembly for improving liquor tasting culture.

### BACKGROUND

With continuous development of society, people's life quality has been greatly improved. In festivals and activities such as various gatherings, the use rate of liquor becomes higher and higher, and people are constantly pursuing high-quality and flavorful raw liquor, which is becoming more and more popular.

Cocktails mixed with good flavors are also becoming increasingly popular, and it is possible customize one's own desired base liquor and various types of drinks on a personal basis. However, there is no concept of cocktail takeout in bars. On the one hand, it is inconvenient; and on the other hand, there are too many types of drinks and alcohol that are not suitable for takeout. Most cocktail consumers like the atmosphere of nightclubs, especially the mixing process of professional bartenders. However, it is a big regret for some people who want to drink unique cocktails during outdoor activities or gatherings.

In a banquet process in the prior art, it is often used to showcase expensiveness of liquor or specialty of the liquor, and in the drinking process, competition is made based on only the amount of drinking liquor. However, tasting for fine liquor's own flavor and unique quality is often overlooked, the entire wine culture ultimately turns into drinking competition culture, and taste culture and attributes of liquor is completely lost.

For consumers who truly love liquor and enjoy tasting liquor, it is a glorious thing to blend fine liquor with different flavors or tastes and share them with everyone. However, in order to meet requirements of standardized production, in the existing market and distilleries, all liquors are uniformly mixed according to standards. The entire mixing standard is evaluated by technical experts in distilleries, and the entire mixing process departs from consumers' actual liquor tasting needs and liquor tasting culture; that is, ordinary consumers is deprived of the opportunity of liquor mixing according to their liquor tasting preferences, and there is also a problem that grading division lacks consumption basis. It is unable to meet the current social's need for personalization requirement and improvement of liquor tasting culture.

Based on the shortcomings existing in the prior art, it is urgently required to research a raw liquor package and a raw liquor package assembly convenient for liquor mixing, and a liquor mixing method for improving liquor tasting culture to solve the above problems.

AU 2018101448A4 discloses a bottle comprising: a sidewall extending upwardly from a bottom 14, and an opening located at the upper end of the sidewall. The sidewall defines a body portion and a neck portion. The body portion and the neck portion are connected at a shoulder portion. The bottle is a0ml travel-sized liquor bottle made of transparent or translucent glass, allowing the liquid level inside the bottle to be observed. The bottle comprises a indicia formation formed on the inner side of the sidewall. The indicia formation comprises an embossed pattern, specifically a repeating circular pattern. The indicia formation covers a predetermined internal area on the sidewall and extends between a fill level adjacent to the opening and a predetermined level in the body portion. This area corresponds to a first standard drink during use. Below the predetermined level, the indicia formation terminates, thereby indicating the end of the first standard drink and the beginning of a second standard drink. In use, a consumer can observe the beverage level inside the bottle and compare the beverage level to the indicia formation to assess whether the first standard drink has been consumed. When viewing the entire indicia formation, a consumer is therefore able to envisage and become familiar with the amount of wine which is equivalent to a standard drink.

US 20150056332A1 discloses a liquor bottle packaging box comprising four base beverage containers and a mix beverage container. When sold, the base beverage containers are not full filled. Each container has a top fill surface and a reserved space between a short fill level and the top fill surface. The volume of the mix beverage container is four times of the volume of the reserved space. When beverage mixing is required, the beverage from the mix beverage container is poured into the reserved space of each base beverage container to achieve mixing.

CN 103903150A discloses a liquor bottle provided with an identification code, which may be a QR code. Furthermore, the identification code is covered by an opaque, one-time removable shielding layer. The shielding layer may be an opaque adhesive layer, such as a sticker. When the shielding layer is removed, exposing the identification code, an electronic device can be used to read the identification code, causing the electronic device to connect to a verification terminal based on the identification code. The verification terminal compares the identification code with product information to generate verification information. This verification information may include details about the liquor, such as the manufacturing date, expiration date, usage instructions, place of origin, or ingredients, for the user's reference. The verification terminal then transmits this verification information to the electronic device, allowing the user to verify whether the liquor is an item shipped by its legitimate supplier. JP 3 211434 U discloses a raw liquor package comprising a liquor mixing cavity, a raw liquor cavity, an upper cup body and a lower cup body.

### SUMMARY OF THE DISCLOSURE

According to embodiments of the present application, a raw liquor package is provided, it comprises: a liquor bottle; wherein an upper portion of an inner cavity of the liquor bottle is a liquor mixing cavity, the liquor mixing cavity is configured to provide an expansion space for self-service liquor mixing for drinkers and accommodate liquor mixing liquid; a lower portion of the inner cavity of the liquor bottle is a raw liquor cavity; an outer sidewall of the liquor bottle is circumferentially provided with at least one set of liquor mixing scales; wherein the raw liquor package further comprises raw liquor liquid packaged in the raw liquor cavity. The liquor bottle includes an upper cup body having the liquor mixing cavity and a lower cup body having the raw liquor body, the upper cup body is rotatably connected to the lower cup body, a first partition plate is fixedly connected to the upper cup body, and a second partition plate is fixedly connected to the lower cup body, the first partition plate is provided with a first through hole, the second partition plate is provided with a second through hole, the first partition plate is rotatable along with the upper cup body, such that the first through hole is in communication with the second through hole when aligned.

Furthermore, the raw liquor liquid is made by fermenting and distilling brewing raw materials in a specific cellar, without undergoing blending or mixing processes; the specific cellar is one of multiple brewing fermentation cellars with different taste or flavor levels.

Another aspect of the present application further protects a raw liquor package assembly convenient for liquor mixing, which comprises a packaging box, wherein the packaging box is provided therein with at least one liquor mixing liquid bottle and at least one aforementioned raw liquor package; the liquor mixing liquid bottle contains liquor mixing liquid and is configured to provide the liquor mixing liquid to drinkers for liquor mixing.

Furthermore, the liquor mixing liquid comprises at least one of auxiliary liquor liquid, sugar liquid, seasoning liquid, or edible spice liquid.

Furthermore, the auxiliary liquor liquid is mixed or blended liquor liquid that complies with national standards.

Furthermore, the liquor mixing liquid further comprises distilled water.

Furthermore, the packaging box is provided therein with multiple aforementioned raw liquor packages, and the raw liquor liquid in the multiple raw liquor packages is packaged from the same brewing fermentation cellar.

Furthermore, the packaging box is provided therein with multiple aforementioned raw liquor packages, and the raw liquor liquid in the multiple raw liquor packages is packaged from multiple brewing fermentation cellar with different flavors and tastes.

Furthermore, a liquor mixing device is further included, the liquor mixing device comprises multiple liquor mixing balls or liquor mixing blocks of different volumes.

Furthermore, the liquor mixing device further comprises a tea bag with a string, and the tea bag contains the liquor mixing balls or the liquor mixing blocks.

Furthermore, the liquor mixing device is made of food grade stainless steel, and the liquor mixing blocks or the liquor mixing balls contain another liquor mixing liquid.

Furthermore, the outer sidewall of the liquor bottle is provided with an identification piece; the identification piece has at least a cellar number identification, a cellar alcohol content identification, a flavor identification, and cellar grade information corresponding to the raw liquor liquid thereon.

Furthermore, the outer sidewall of the liquor bottle is further provided with a covering piece; the covering piece is removable from the outer sidewall of the liquor bottle, and the covering piece covers on the identification piece, such that the identification piece is invisible and a blind-box drinking style is formed.

Furthermore, the identification piece is provided with a digital identifier for scanning and identification by mobile terminals; the digital identifier is configured for a mobile terminal to scan and thereby connect to a cloud server of a distillery or supplier, and upload cellar information corresponding to the raw liquor liquid in the liquor bottle to the cloud server of the distillery or supplier, such that the cloud server of the distillery or supplier sends electronic gifts, electronic currencies, or prize information corresponding to the cellar information to the mobile terminal.

Another aspect of the present application further protects a liquor mixing method, which uses the aforementioned raw liquor package assembly. The method comprises: a cellar completing a brewing process and obtains raw liquor liquid that has neither been blended nor been mixed; measuring a degree of the raw liquor liquid of the cellar; canning the raw liquor liquid of the cellar; canning the raw liquor liquid of the cellar into multiple liquor bottles and sealing; dividing the sealed liquor bottles into packaging boxes and selling them to drinkers; the drinkers performing liquor mixing according to the liquor bottles or their own experience; after tasting liquor, the drinkers scanning digital identifications by mobile terminals and accessing an application (APP); the drinkers performing evaluation according to a redirected page of the application, and uploading liquor mixing solutions or uploading liquor mixing videos to a cloud server; alternatively, a plurality of drinkers simultaneously uploading liquor mixing solutions, conducting liquor mixing competitions, sharing liquor mixing solutions, and selling personal liquor mixing solutions, thereby forming a liquor mixing and liquor tasting culture community; according to the type of the cellar, the drinkers making online reservations for purchase quantities and generating cellar orders; the cloud server obtaining the cellar orders, matching them with personal liquor mixing solutions, and sending them to a distillery; the distillery performing packaging for the raw liquor package assembly according to the cellar orders and the personal liquor mixing solutions; a consumer obtaining a raw liquor package assembly sent by the distillery that meets a personalized liquor mixing taste thereof.

Furthermore, the drinkers, according to the type of the cellar and their own personal liquor mixing solutions or other personal liquor mixing solutions disclosed by a specified liquor mixing and liquor tasting culture community, make online reservations for purchase quantities and generate cellar orders matching with the personal liquor mixing solutions.

Furthermore, the liquor mixing method is a liquor mixing method for a plurality of bottles of liquor of the same cellar in a packaging box.

Furthermore, the liquor mixing method is a liquor mixing method for a plurality of bottles of liquor of different cellars in a packaging box.

Details of one or more embodiments of the present application are presented in the following drawings and description. Other features, purposes, and advantages of the present application will become apparent from the specification, drawings, and claims.

### BRIEF DESCRIPTION OF THE DRAWINGS

In order to explain technical solutions of the present application more clearly, drawings required to be used in description of the embodiments or of the prior art will be briefly introduced below. It is obvious that the drawings in the following description are only some embodiments of the present application. For one of ordinary skill in the art, other drawings can be further obtained according to these drawings on the premise of paying no creative work.
FIG. 1 is a structural view of a raw liquor package according to an embodiment of the present application.
FIG. 2 is a flow chart of a liquor mixing method according to an embodiment of the present application.

11-liquor bottle; 12-sealing cover; 13-identification piece; 14-covering piece; 112-liquor mixing cavity; 113-raw liquor cavity; 141-first covering part; 142-second covering part; 143-tearable opening structure.

### DETAILED DESCRIPTION

The technical solutions in the embodiments of the present application will be described clearly and completely below in combination with the drawings in the embodiments of the present application. Obviously, the described embodiments are merely some embodiments of the present application, rather than all embodiments.

It needs to be noted that the terms "first", "second", and the like in the specification, the claims, and the aforementioned drawings of the present application are used to distinguish similar objects, and need not be used to describe a specific sequence or order. It should be understood that data used in this way can be interchanged in appropriate cases, so that the embodiments of the present application described herein can be implemented in order other than those illustrated or described herein. In addition, the terms "include", "have", as well as any variations thereof, are intended to cover non-exclusive inclusion. For example, a process, method, system, product, or device that includes a series of steps or units need not be limited to those clearly listed steps or units, but may include other steps or units that are not clearly listed or inherent to these processes, methods, products, or devices.

The prior art has the following shortcoming: cocktails mixed with good flavors are also becoming increasingly popular, and it is possible customize one's own desired base liquor and various types of drinks on a personal basis. However, there is no concept of cocktail takeout in bars. On the one hand, it is inconvenient; and on the other hand, there are too many types of drinks and alcohol that are not suitable for takeout. Most cocktail consumers like the atmosphere of nightclubs, especially the mixing process of professional bartenders. However, it is a big regret for some people who want to drink unique cocktails during outdoor activities or gatherings.

Aiming the shortcoming in the prior art, the present application arranges a liquor mixing cavity and a raw liquor cavity communicating with each other, the raw liquor cavity is used to accommodate raw liquor that is neither blended nor mixed by a distillery bartender and directly canned from a cellar, and the liquor mixing cavity is used to accommodate liquor mixing liquid, such that drinkers can directly use the raw liquor as base liquor to perform liquor mixing in a liquor bottle, need not use additional liquor mixing devices, and can freely determine preparing time and drinking time of cocktail. There is no location restriction either, it is possible to mix various flavors at will using liquor containing assemblies, users' requirements are met, the structure is simple, and the operations are easy. At the same time, it is convenient to carry, such that the liquor mixing process is easier. Moreover, a covering piece is used to cover an identification piece, which is used to form a blind-box drinking style and increase fun of drinking.

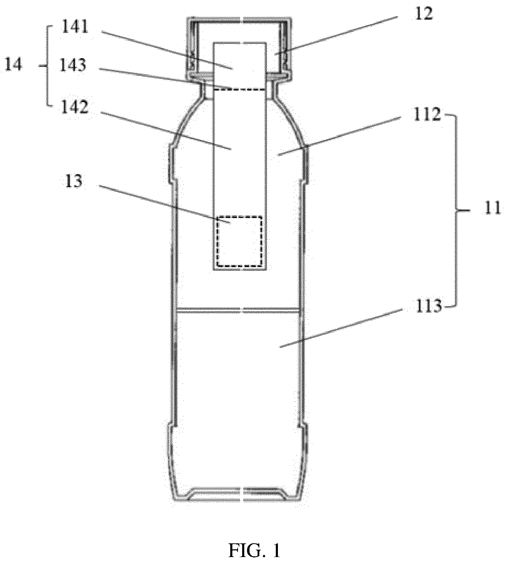

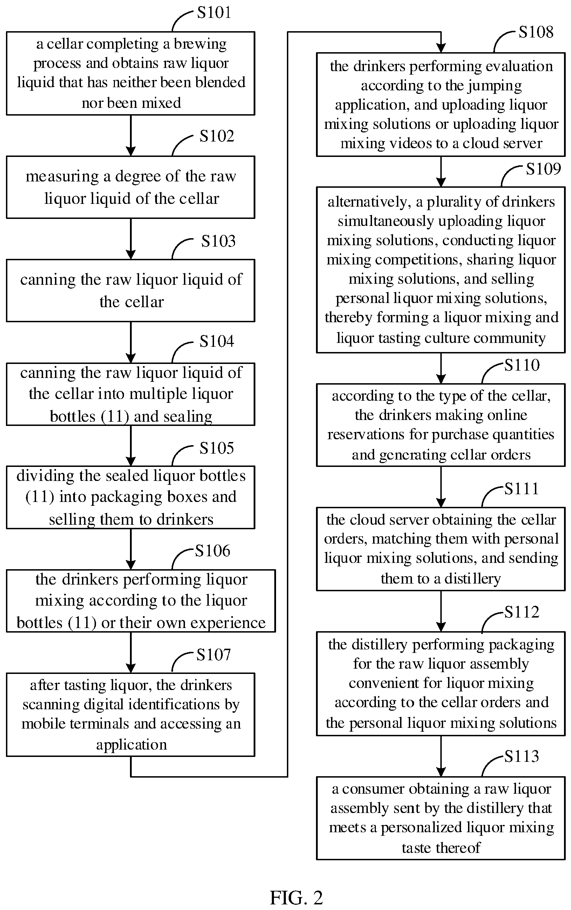

Referring to FIG. 1-FIG. 2, this embodiment provides a raw liquor package convenient for liquor mixing, which includes a liquor bottle 11; an upper portion of an inner cavity of the liquor bottle 11 is a liquor mixing cavity 112, the liquor mixing cavity 112 is configured to provide an expansion space for self-service liquor mixing for drinkers and accommodate liquor mixing liquid; a lower portion of the inner cavity of the liquor bottle 11 is a raw liquor cavity 113, the raw liquor package further includes raw liquor liquid is packaged in the raw liquor cavity 113; an outer sidewall of the liquor bottle 11 is circumferentially provided with at least one set of liquor mixing scales.

It needs to be explained that the present application arranges the liquor mixing cavity 112 and the raw liquor cavity 113 communicating with each other, the raw liquor cavity 113 is used to accommodate raw liquor that is neither blended nor mixed by a distillery bartender and directly canned from a cellar, and the liquor mixing cavity 112 is used to accommodate liquor mixing liquid, such that drinkers can directly use the raw liquor as base liquor to perform liquor mixing in the liquor bottle 11, need not use additional liquor mixing devices, and can freely determine preparing time and drinking time of cocktail. There is no location restriction either, it is possible to mix various flavors at will using liquor containing assemblies, users' requirements are met, the structure is simple, and the operations are easy. At the same time, it is convenient to carry, such that the liquor mixing process is easier.

It needs to be further explained that in this embodiment, the liquor bottle 11 can not only hold liquor but also be used for liquor mixing, so that it is reused as a daily item in daily life, thereby saving resources to a certain extent.

Specifically, the liquor mixing scales are used to display an alcohol content after liquor mixing or used to display a volume of the liquor mixing liquid in the liquor bottle 11.

The outer sidewall of the liquor bottle 11 is further provided with a set of liquor mixing graduation lines, the liquor mixing graduation lines are set along a height direction of the liquor bottle 11, and the liquor mixing graduation lines are used to display a volume of the liquor mixing liquid.

In some possible embodiments, a sidewall of the liquor bottle 11 is provided with a transparent window, the liquor mixing graduation lines are arranged on the transparent window, such that the volume of the liquor mixing liquid can be intuitively seen during liquor mixing, it is convenient to control a proportion of added liquid and thereby blend out liquor suitable for one's own taste.

In some possible embodiments, the raw liquor liquid is made by fermenting and distilling brewing raw materials in a specific cellar, without undergoing blending or mixing processes; the specific cellar is one of multiple brewing fermentation cellars with different taste or flavor levels.

Another aspect of the present application further protects a raw liquor package assembly convenient for liquor mixing, which includes a packaging box, the packaging box is provided therein with at least one liquor mixing liquid bottle and at least one aforementioned raw liquor package convenient for liquor mixing; the liquor mixing liquid bottle contains liquor mixing liquid and is configured to provide the liquor mixing liquid for liquor mixing to drinkers.

In some possible embodiments, the liquor mixing liquid includes at least one of auxiliary liquor liquid, sugar liquid, seasoning liquid, or edible spice liquid.

In some possible embodiments, the auxiliary liquor liquid is mixed or blended liquor liquid that complies with national standards.

In some possible embodiments, the liquor mixing liquid further includes distilled water.

In this embodiment, the packaging box is provided therein with one liquor bottle 11 and one liquor mixing liquid bottle, liquid in the liquor mixing liquid bottle can be poured into the liquid bottle 11 to perform liquor mixing.

In some possible embodiments, the packaging box includes a plurality of first accommodation grooves and at least one second accommodation groove; the second accommodation groove is provided therein with the liquor mixing liquid bottle; each of the first accommodation grooves can be provided therein with a raw liquor, and a plurality of raw liquors in the packaging box can come from different cellars, such that a drinker can drink the raw liquors of multiple cellars, and it is easy to find raw liquor liquid suitable for the drinker's preference.

In some possible embodiments, the packaging box is provided therein with multiple aforementioned raw liquor packages, and the raw liquor liquid in the multiple raw liquor packages is packaged from the same brewing fermentation cellar.

In some possible embodiments, the packaging box is provided therein with multiple aforementioned raw liquor packages, and the raw liquor liquid in the multiple raw liquors is packaged from multiple brewing fermentation cellar with different flavors and tastes.

In some possible embodiments, a liquor mixing device is further included, the liquor mixing device includes multiple liquor mixing balls or liquor mixing blocks of different volumes.

In some possible embodiments, the liquor mixing device further comprises a tea bag with thread, and the tea bag contains the liquor mixing balls or the liquor mixing blocks.

In some possible embodiments, the liquor mixing device is a cylindrical casing, the tea bag with thread is placed in the cylindrical casing, and the liquor mixing balls or the liquor mixing blocks are placed in the tea bag with thread.

In some possible embodiments, the liquor mixing device is made of food grade stainless steel, and the liquor mixing blocks or the liquor mixing balls contain liquor mixing liquid with a constant volume.

In some possible embodiments, the outer sidewall of the liquor bottle 11 is provided with an identification piece 13; the identification piece 13 has at least a cellar number identification, a cellar alcohol content identification, a flavor identification, and cellar grade information corresponding to the raw liquor liquid thereon.

In some possible embodiments, the outer sidewall of the liquor bottle 11 is further provided with a covering piece 14; the covering piece 14 is removable from the outer sidewall of the liquor bottle 11, and the covering piece 14 covers on the identification piece 13, such that the identification piece 13 is invisible and a blind-box drinking style is formed.

Specifically, the identification piece 13 has at least a cellar number identification, a cellar alcohol content identification, a flavor identification, and cellar grade information corresponding to the raw liquor liquid thereon.

In some possible embodiments, the outer sidewall of the liquor bottle 11 is provided with two identification pieces 3, wherein one identification piece 13 is covered by the covering piece 14, the other identification piece 3 is not covered by the covering piece 4, and the uncovered identification piece 3 is provided with a digital identifier for scanning and identification by mobile terminals.

In some possible embodiments, the identification piece 13 is adhered on the outer sidewall of the liquor bottle 11, and the identification piece 13 is a paper label.

Furthermore, the covering piece 14 is removably connected to the liquor bottle 11, and the covering piece 14 covers on the identification piece 13, such that the identification piece 13 is invisible.

In some possible embodiments, the covering piece 14 is adhered on the identification piece 13; the covering piece 14 covers the identification piece 13 completely, the identification piece 13 cannot be seen, such that drinkers do not know the flavor of the raw liquor liquid, thereby forming a blind-box drinking style and increasing fun of drinking; the covering piece 14 is also a paper label.

Specifically, an adhesive force between the covering piece 14 and the identification piece 13 is less than an adhesive force between the identification piece 13 and the liquor bottle 11, such that the covering piece 14 can be torn off from the identification piece 13, while the identification piece 13 is still adhered on the liquor bottle 11.

Specifically, after the covering piece 14 is torn off from the identification piece 13, the covering piece 14 cannot be adhered to the identification piece 13 again, that is, the covering piece 14 cannot be reused. It can be avoided that the covering piece 14 is attached again after the raw liquor liquid is blended. The covering piece 14 that cannot be reused can ensure that the raw liquor liquid in the raw liquor is not blended.

In some possible embodiments, the covering piece 14 includes a first covering part 141, a second covering part 142, and a tearable opening structure 143 formed by prefabricated cut dashed lines; the tearable opening structure 143 is arranged at the connection between the first covering part 141 and the second covering part 142; the first covering part 141 is adhered and fixed to a sealing cover 12, and the second covering part 142 is adhered and fixed to the liquor bottle 11.

Specifically, each raw liquor is provided thereon with an identification piece 13 corresponding thereto.

In some possible embodiments, the identification piece 13 is provided with a digital identifier for scanning and identification by mobile terminals. The digital identifier is used for a mobile terminal to scan and thereby connect to a cloud server of a distillery or supplier, and upload cellar information corresponding to the raw liquor liquid in the liquor bottle 11 to the cloud server of the distillery or supplier, such that the cloud server of the distillery or supplier sends electronic gifts, electronic currencies, or prize information corresponding to the cellar information to the mobile terminal.

Specifically, the sealing cover 12 is further included, the sealing cover 12 is connected by thread to an opening end of the liquor bottle 11.

The liquor bottle 11 includes a first partition plate and a second partition plate, the first partition plate and the second partition plate are arranged along an axial direction of the liquor bottle 11, and both an axis of the first partition plate and an axis of the second partition plate coincide with an axis of the liquor bottle 11.

Specifically, the liquor bottle 11 includes an upper cup body having the liquor mixing cavity and a lower cup body having the raw liquor body, the upper cup body is rotatably connected to the lower cup body, the first partition plate is fixedly connected to the upper cup body, and the second partition plate is fixedly connected to the lower cup body. The first partition plate is provided with a first through hole, the second partition plate is provided with a second through hole, the first partition plate is rotatable along with the upper cup body, such that the first through hole is in communication with the second through hole.

Another aspect of the present application further protects a liquor mixing method for improving liquor tasting culture, which uses the aforementioned raw liquor package assembly convenient for liquor mixing. The method includes: S101, a cellar completes a brewing process and obtains raw liquor liquid that has neither been blended nor been mixed; S102, measuring a degree of the raw liquor liquid of the cellar; S103, canning the raw liquor liquid of the cellar; S104, canning the raw liquor liquid of the cellar into multiple liquor bottles 11 and sealing; S105, dividing the sealed liquor bottles 11 into packaging boxes and selling them to drinkers; S106, the drinkers perform liquor mixing according to the liquor bottles 11 or their own experience; S107, after tasting liquor, the drinkers scan digital identifications by mobile terminals and access an application; S108, the drinkers perform evaluation according to the jumping application, and upload liquor mixing solutions or upload liquor mixing videos to a cloud server; S109, alternatively, a plurality of drinkers simultaneously upload liquor mixing solutions, conduct liquor mixing competitions, share liquor mixing solutions, and sell personal liquor mixing solutions, thereby forming a liquor mixing and liquor tasting culture community; S110, according to the type of the cellar, the drinkers make online reservations for purchase quantities and generate cellar orders; S111, the cloud server obtains the cellar orders, matches them with personal liquor mixing solutions, and sends them to a distillery; S112, the distillery performs packaging for the raw liquor package assembly convenient for liquor mixing according to the cellar orders and the personal liquor mixing solutions; S113, a consumer obtains a raw liquor package assembly sent by the distillery that meets a personalized liquor mixing taste thereof.

In some possible embodiments, the drinkers, according to the type of the cellar and their own personal liquor mixing solutions or other personal liquor mixing solutions disclosed by a specified liquor mixing and liquor tasting culture community, make online reservations for purchase quantities and generate cellar orders matching with the personal liquor mixing solutions.

Specifically, the canning the raw liquor liquid in the cellar into multiple liquor bottles 11 and sealing includes: obtaining liquor information in a designated cellar, amount of liquor produced in the designated cellar, and a volume of the raw liquor liquid contained in the raw liquor; obtaining the number of the raw liquors that can be canned based on the volume of the raw liquor liquid contained in the raw liquor and the amount of liquor produced in the designated cellar; obtaining the identification pieces 13 having the liquor information based on the number of the raw liquors that can be canned and the liquor information, wherein the number of the identification pieces 13 is equal to that of the raw liquors; dividing the raw liquor liquid of the designated cellar into multiple raw liquors, arranging the identification pieces 13 on the raw liquors and sealing, thereby obtaining sealed raw liquors; dividing the sealed raw liquors into packaging boxes.

Specifically, after that a consumer obtains a raw liquor assembly sent by the distillery that meets a personalized liquor mixing taste thereof, the method further includes that: the distillery grades or optimizes the grading of cellars based on the number of orders.

That the distillery grades or optimizes the grading of cellars based on the number of orders includes that: a mobile terminal can evaluate the cellars by scanning the digital identifier on the raw liquors and based on the preferences of the drinkers, and sends an evaluation result to a distillery client or a cloud server; the distillery client or the cloud server grades or optimizes the grading of cellars based on the evaluation result and required amount; and sorts according levels of the cellars to obtain a cellar level ranking.

Specifically, the obtaining the number of the raw liquors that can be canned based on the volume of the raw liquor liquid contained in the raw liquor and the amount of liquor produced in the designated cellar includes: dividing the amount of liquor produced in the designated cellar by the volume of the raw liquor liquid contained in the raw liquor, the obtained integer is the number of the raw liquors that can be canned.

**In** some possible embodiments, after the dividing the sealed raw liquors into packaging boxes, the method further includes: obtaining the number of the raw liquors of the designated cellar that can be canned and the number of the raw liquors accommodated in one packaging box; dividing the number of the raw liquors of the designated cellar that can be canned by the number of the raw liquors accommodated in one packaging box to obtain the number of required packaging boxes.

**In** some possible embodiments, the liquor mixing method for improving liquor tasting culture is a liquor mixing method for a plurality of bottles of liquor of the same cellar in a packaging box.

**In** some possible embodiments, the liquor mixing method for improving liquor tasting culture is a liquor mixing method for a plurality of bottles of liquor of different cellars in a packaging box.

Although the present application has been described through preferred embodiments, the present application is not limited to the embodiments described herein and further includes various changes and variations made without departing from the scope of the present application.

**In** this specification, the involved positional terms, such as "front", "back", "up", "down", and the like are defined according to positions of components located in the figures and among the components in the accompany drawings, and are only for clarity and convenience of expressing technical solutions. It should be understood that the use of the positional terms should not limit the scope of protection requested in the present application.

In this specification, the above embodiments and features in the embodiments can be combined with each other in the situation of no conflict.

The above disclosure is only a preferred embodiment of the present application, and of course, it cannot be used to limit the scope of right of the present application. Therefore, equivalent changes made according to the claims of the present application still fall within the scope covered by the present application.

## Claims

1. A raw liquor package comprising a liquor bottle (11); wherein an upper portion of an inner cavity of the liquor bottle (11) is a liquor mixing cavity (112), the liquor mixing cavity (112) is configured to provide an expansion space for self-service liquor mixing for drinkers and accommodate liquor mixing liquid; a lower portion of the inner cavity of the liquor bottle (11) is a raw liquor cavity (113); an outer sidewall of the liquor bottle (11) is circumferentially provided with at least one set of liquor mixing scales; wherein the raw liquor package further comprises raw liquor liquid packaged in the raw liquor cavity (113);
where the liquor bottle (11) comprises an upper cup body having the liquor mixing cavity and a lower cup body having the raw liquor body, the upper cup body being rotatably connected to the lower cup body, a first partition plate being fixedly connected to the upper cup body, and a second partition plate being fixedly connected to the lower cup body, the first partition plate being provided with a first through hole, the second partition plate being provided with a second through hole, the first partition plate being rotatable along with the upper cup body, such that the first through hole is in communication with the second through hole when aligned.

2. The raw liquor package according to claim 1, wherein the raw liquor liquid is made by fermenting and distilling brewing raw materials in a specific cellar, without undergoing blending or mixing processes; the specific cellar is one of multiple brewing fermentation cellars with different taste or flavor levels.

3. A raw liquor package assembly comprising a packaging box, wherein the packaging box is provided therein with at least one liquor mixing liquid bottle and at least one raw liquor package according to claim 1 or 2; the liquor mixing liquid bottle contains liquor mixing liquid and is configured to provide the liquor mixing liquid to drinkers for liquor mixing.

4. The raw liquor package assembly according to claim 3, wherein the liquor mixing liquid comprises at least one of auxiliary liquor liquid, sugar liquid, seasoning liquid, or edible spice liquid.

5. The raw liquor package assembly according to claim 4, wherein the auxiliary liquor liquid is mixed or blended liquor liquid that complies with national standards.

6. The raw liquor package assembly according to claim 4 or 5, wherein the liquor mixing liquid further comprises distilled water.

7. The raw liquor package assembly according to any one of claims 3-6, wherein the packaging box is provided therein with multiple raw liquor packages according to claim 1 or 2, and the raw liquor liquid in the multiple raw liquors is packaged from the same brewing fermentation cellar.

8. The raw liquor package assembly convenient for liquor mixing according to any one of claims 3-7, wherein the packaging box is provided therein with multiple raw liquor packages according to claim 1 or 2, and the raw liquor liquid in the multiple raw liquors is packaged from multiple brewing fermentation cellar with different flavors and tastes.

9. The raw liquor package assembly according to any one of claims 3 -8, further comprising a liquor mixing device, wherein the liquor mixing device comprises multiple liquor mixing balls or liquor mixing blocks of different volumes.

10. The raw liquor package assembly according to claim 9, wherein the liquor mixing device further comprises a tea bag with a string, and the tea bag contains the liquor mixing balls or the liquor mixing blocks.

11. The raw liquor package assembly according to claim 9 or 10, wherein the liquor mixing device is made of food grade stainless steel, and the liquor mixing blocks or the liquor mixing balls contain another liquor mixing liquid.

12. The raw liquor package assembly according to any one of claims 3-11, wherein the outer sidewall of the liquor bottle (11) is provided with an identification piece (13); the identification piece (13) has at least a cellar number identification, a cellar alcohol content identification, a flavor identification, and cellar grade information corresponding to the raw liquor liquid thereon.

13. The raw liquor package assembly according to claim 12, wherein the outer sidewall of the liquor bottle (11) is further provided with a covering piece (14); the covering piece (14) is removable from the outer sidewall of the liquor bottle (11), and the covering piece (14) covers on the identification piece (13), such that the identification piece (13) is invisible and a blind-box drinking style is formed.

14. The raw liquor package assembly according to claim 12 or 13, wherein the identification piece (13) is provided with a digital identifier for scanning and identification by mobile terminals; the digital identifier is configured for a mobile terminal to scan and thereby connect to a cloud server of a distillery or supplier, and upload cellar information corresponding to the raw liquor liquid in the liquor bottle (11) to the cloud server of the distillery or supplier, such that the cloud server of the distillery or supplier sends electronic gifts, electronic currencies, or prize information corresponding to the cellar information to the mobile terminal.

15. A liquor mixing method, which uses the raw liquor package assembly according to any one of claims 3-14; wherein the method comprises: a cellar completing (S101) a brewing process and obtains raw liquor liquid that has neither been blended nor been mixed; measuring (S102) a degree of the raw liquor liquid of the cellar; canning (S103) the raw liquor liquid of the cellar; canning (S104) the raw liquor liquid of the cellar into multiple liquor bottles (11) and sealing; dividing (S105) the sealed liquor bottles (11) into the packaging boxes and selling them to drinkers; the drinkers performing (S106) liquor mixing according to the liquor bottles (11) or their own experience; after tasting liquor, the drinkers scanning (S107) digital identifications by mobile terminals and accessing an application (APP); the drinkers performing (S108) evaluation according to a redirected page of the application, and uploading liquor mixing solutions or uploading liquor mixing videos to a cloud server; alternatively, a plurality of drinkers simultaneously uploading (S109) liquor mixing solutions, conducting liquor mixing competitions, sharing liquor mixing solutions, and selling personal liquor mixing solutions, thereby forming a liquor mixing and liquor tasting culture community; according to the type of the cellar, the drinkers making (S110) online reservations for purchase quantities and generating cellar orders; the cloud server obtaining (S111) the cellar orders, matching them with personal liquor mixing solutions, and sending them to a distillery; the distillery performing (S112) packaging for the raw liquor package assembly according to the cellar orders and the personal liquor mixing solutions; a consumer obtaining (S113) a raw liquor package assembly sent by the distillery that meets a personalized liquor mixing taste thereof.

16. The liquor mixing method according to claim 15, wherein the drinkers, according to the type of the cellar and their own personal liquor mixing solutions or other personal liquor mixing solutions disclosed by a specified liquor mixing and liquor tasting culture community, make online reservations for purchase quantities and generate cellar orders matching with the personal liquor mixing solutions.

17. The liquor mixing method according to claim 15 or 16, wherein the liquor mixing method is a liquor mixing method for a plurality of bottles of liquor of the same cellar in a packaging box.

18. The liquor mixing method according to claim 15 or 16, wherein the liquor mixing method is a liquor mixing method for a plurality of bottles of liquor of different cellars in a packaging box.

## Patentansprüche

1. Rohspirituosenpaket, umfassend eine Spirituosenflasche (11), wobei ein oberer Abschnitt einer Innenkammer der Spirituosenflasche (11) eine Spirituosenmischkammer (112) ist, wobei die Spirituosenmischkammer (112) dazu konfiguriert ist, einen Expansionsraum für Selbstmischen von Spirituosen durch die Konsumenten bereitzustellen und Spirituosenmischflüssigkeit aufzunehmen, wobei ein unterer Abschnitt der Innenkammer der Spirituosenflasche (11) eine Rohspirituosenkammer (113) ist, wobei eine Außenseitenwand der Spirituosenflasche (11) umlaufend mit mindestens einem Set von Spirituosenmischskalen versehen ist, wobei das Rohspirituosenpaket ferner Rohspirituosenflüssigkeit umfasst, die in der Rohspirituosenkammer (113) verpackt ist;
wobei die Spirituosenflasche (11) einen oberen Becherkörper mit der Spirituosenmischkammer und einen unteren Becherkörper mit dem Rohspirituosenkörper umfasst, wobei der obere Becherkörper drehbar mit dem unteren Becherkörper verbunden ist, wobei eine erste Trennplatte fest mit dem oberen Becherkörper verbunden und eine zweite Trennplatte fest mit dem unteren Becherkörper verbunden ist, wobei die erste Trennplatte mit einem ersten Durchgangsloch versehen und die zweite Trennplatte mit einem zweiten Durchgangsloch versehen ist, wobei die erste Trennplatte zusammen mit dem oberen Becherkörper drehbar ist, sodass das erste Durchgangsloch mit dem zweiten Durchgangsloch beim Ausrichten in Kommunikation steht.

2. Rohspirituosenpaket nach Anspruch 1, wobei die Rohspirituosenflüssigkeit durch Fermentieren und Destillieren von Braurohstoffen in einem bestimmten Keller hergestellt wird, ohne dass Verschnitt- oder Mischprozesse stattfinden, wobei der bestimmte Keller einer von mehreren Braugärungskellern mit unterschiedlichen Geschmacks- oder Aromastufen ist.

3. Rohspirituosenpaketanordnung, umfassend eine Verpackungsbox, wobei sich in der Verpackungsbox mindestens eine Flasche mit Spirituosenmischflüssigkeit und mindestens eines der oben genannten Rohspirituosenpakete gemäß Anspruch 1 oder 2 befindet, wobei die Flasche mit Spirituosenmischflüssigkeit Spirituosenmischflüssigkeit enthält und dazu konfiguriert ist, den Konsumenten die Spirituosenmischflüssigkeit zum Mischen von Spirituosen bereitzustellen.

4. Rohspirituosenpaketanordnung nach Anspruch 3, wobei die Spirituosenmischflüssigkeit mindestens eine der folgenden Komponenten umfasst: Hilfsspirituosenflüssigkeit, Zuckerflüssigkeit, Würzflüssigkeit oder essbare Gewürzflüssigkeit.

5. Rohspirituosenpaketanordnung nach Anspruch 4, wobei die Hilfsspirituosenflüssigkeit gemischte oder verschnittene Spirituosenflüssigkeit ist, die den nationalen Standards entspricht.

6. Rohspirituosenpaketanordnung nach Anspruch 4 oder 5, wobei die Spirituosenmischflüssigkeit ferner destilliertes Wasser umfasst.

7. Rohspirituosenpaketanordnung nach einem der Ansprüche 3 bis 6, wobei die Verpackungsbox mit mehreren Rohspirituosenpaketen gemäß Anspruch 1 oder 2 versehen ist und die Rohspirituosenflüssigkeit in den mehreren Rohspirituosen aus demselben Braugärungskeller verpackt ist.

8. Rohspirituosenpaketanordnung zur bequemen Spirituosenmischung nach einem der Ansprüche 3 bis 7, wobei die Verpackungsbox mit mehreren Rohspirituosenpaketen gemäß Anspruch 1 oder 2 versehen ist und die Rohspirituosenflüssigkeit in den mehreren Rohspirituosen aus mehreren Braugärungskellern mit unterschiedlichen Geschmacksrichtungen und Aromen verpackt ist.

9. Rohspirituosenpaketanordnung nach einem der Ansprüche 3 bis 8, weiterhin umfassend ein Spirituosenmischgerä, wobei das Spirituosenmischgerät mehrere Spirituosenmischkugeln oder Spirituosenmischblöcke mit unterschiedlichen Volumina umfasst.

10. Rohspirituosenpaketanordnung nach Anspruch 9, wobei das Spirituosenmischgerät ferner einen Teebeutel mit Faden umfasst, wobei der Teebeutel die Spirituosenmischkugeln oder Spirituosenmischblöcke enthält.

11. Rohspirituosenpaketanordnung nach Anspruch 9 oder 10, wobei das Spirituosenmischgerät aus lebensmittelechtem Edelstahl besteht, wobei die Spirituosenmischblöcke oder Spirituosenmischkugeln weitere Spirituosenmischflüssigkeit enthalten.

12. Rohspirituosenpaketanordnung nach einem der Ansprüche 3 bis 11, wobei die Außenseitenwand der Spirituosenflasche (11) mit einem Identifikationsstück (13) versehen ist, wobei das Identifikationsstück (13) mindestens eine Kellernummernkennzeichnung, eine Kelleralkoholgehaltskennzeichnung, eine Geschmackskennzeichnung und Kellerstufeninformationen aufweist, die der Rohspirituosenflüssigkeit entsprechen.

13. Rohspirituosenpaketanordnung nach Anspruch 12, wobei die Außenseitenwand der Spirituosenflasche (11) ferner mit einem Abdeckstück (14) versehen, wobei das Abdeckstück (14) von der Außenseitenwand der Spirituosenflasche (11) entfernt werden kann, wobei Abdeckstück (14) das Identifikationsstück (13) bedeckt, sodass das Identifikationsstück (13) nicht sichtbar ist und ein Blindbox-Trinkstil entsteht.

14. Rohspirituosenpaketanordnung nach Anspruch 12 oder 13, wobei das Identifikationsstück (13) mit einem digitalen Kennzeichen versehen ist, das von mobilen Endgeräten gescannt und erkannt werden kann, wobei das digitale Kennzeichen so konfiguriert ist, dass ein mobiles Endgerät es scannt und sich dadurch mit einem Cloud-Server einer Brennerei oder eines Lieferanten verbindet und Kellerinformationen, die der Rohspirituosenflüssigkeit in der Spirituosenflasche (11) entsprechen, an den Cloud-Server der Brennerei oder des Lieferanten hochlädt, sodass der Cloud-Server der Brennerei oder des Lieferanten elektronische Geschenke, elektronische Währungen oder Gewinninformationen, die den Kellerinformationen entsprechen, an das mobile Endgerät sendet.

15. Verfahren zum Mischen von Spirituosen, bei dem die Rohspirituosenpaketanordnung gemäß einem der Ansprüche 3 bis 14 verwendet wird, wobei das Verfahren Folgendes umfasst: (S101) Durchlaufen eines Brauprozesses und Erhalten von Rohspirituosenflüssigkeit durch einen Keller, die weder verschnitten noch gemischt wurde; Messen (S102) eines Alkoholgehalts der Rohspirituosenflüssigkeit des Kellers; Abfüllen (S103) der Rohspirituosenflüssigkeit des Kellers; Abfüllen (S104) der Rohspirituosenflüssigkeit des Kellers in mehrere Spirituosenflaschen (11) und Versiegeln; Aufteilen (S105) der versiegelten Spirituosenflaschen (11) in die Verpackungsboxen und Verkaufen an Konsumenten; Durchführen (S106) des Mischens von Spirituosen durch die Konsumenten entsprechend den Spirituosenflaschen (11) oder ihrer eigenen Erfahrung; Scannen (S107) digitaler Kennzeichnungen mittels mobiler Endgeräte und Zugreifen auf eine Anwendung (APP) durch die Konsumenten nach der Verkostung; Durchführen (S108) einer Bewertung durch die Konsumenten gemäß einer weitergeleiteten Seite der Anwendung und Hochladen von Spirituosenmischlösungen oder Hochladen von Spirituosenmischvideos auf einen Cloud-Server; alternativ gleichzeitiges Hochladen (S109) von Spirituosenmischlösungen durch mehrere Konsumenten, Durchführen von Mischwettbewerben, Teilen von Spirituosenmischlösungen und Verkaufen von persönlichen Spirituosenmischlösungen, wodurch eine Community für Spirituosenmisch- und Verkostungskultur entsteht; Online-Reservieren (S110) von Kaufmengen und Erzeugen von Kellerbestellungen durch die Konsumenten entsprechend dem Kellertyp; Erhalten (S111) der Kellerbestellungen durch den Cloud-Server, Abgleichen mit den persönlichen Spirituosenmischlösungen und Senden an eine Brennerei; Durchführen (S112) einer Verpackung der Rohspirituosenpaketanordnung durch die Brennerei gemäß den Kellerbestellungen und den persönlichen Spirituosenmischlösungen; Erhalten (S113) einer von der Brennerei versandten Rohspirituosenpaketanordnung durch einen Verbraucher, die seinem individuellen Spirituosenmischgeschmack entspricht.

16. Verfahren zum Mischen von Spirituosen nach Anspruch 15, wobei die Konsumenten entsprechend dem Kellertyp und ihren eigenen persönlichen Spirituosenmischlösungen oder anderen persönlichen Spirituosenmischlösungen, die von einer bestimmten Spirituosenmisch- und Verkostungskultur-Community offengelegt wurden, online die Kaufmengen reservieren und Kellerbestellungen erzeugen, die mit den persönlichen Spirituosenmischlösungen übereinstimmen.

17. Verfahren zum Mischen von Spirituosen nach Anspruch 15 oder 16, wobei das Verfahren zum Mischen von Spirituosen ein Spirituosenmischverfahren für mehrere Flaschen von Spirituosen desselben Kellers in einer Verpackungsbox ist.

18. Verfahren zum Mischen von Spirituosen nach Anspruch 15 oder 16, wobei das Verfahren zum Mischen von Spirituosen ein Spirituosenmischverfahren für mehrere Flaschen von Spirituosen verschiedener Keller in einer Verpackungsbox ist.

## Revendications

1. Emballage d'alcool brut comprenant une bouteille d'alcool (11) ; dans lequel une partie supérieure de la cavité interne de la bouteille d'alcool (11) est une cavité de mélange d'alcool (112), la cavité de mélange d'alcool (112) est configurée pour fournir un espace d'expansion permettant à des consommateurs de réaliser eux-mêmes le mélange d'alcool et d'accueillir un liquide de mélange d'alcool ; une partie inférieure de la cavité interne de la bouteille d'alcool (11) est une cavité d'alcool brut (113) ; une paroi latérale externe de la bouteille d'alcool (11) est pourvue circumférentiellement d'au moins un ensemble de graduations de mélange d'alcool ; dans lequel l'emballage d'alcool brut comprend en outre un liquide d'alcool brut conditionné dans la cavité d'alcool brut (113) ;
dans lequel la bouteille d'alcool (11) comprend un corps de coupe supérieur ayant la cavité de mélange d'alcool et un corps de coupe inférieur ayant la cavité d'alcool brut, le corps de coupe supérieur étant relié de manière rotative au corps de coupe inférieur, une première plaque de séparation étant reliée de manière fixe au corps de coupe supérieur, et une seconde plaque de séparation étant reliée de manière fixe au corps de coupe inférieur, la première plaque de séparation étant pourvue d'un premier trou traversant, la seconde plaque de séparation étant pourvue d'un second trou traversant, la première plaque de séparation pouvant tourner avec le corps de coupe supérieur, de sorte que le premier trou traversant soit en communication avec le second trou traversant lorsqu'ils sont alignés.

2. Emballage d'alcool brut selon la revendication 1, dans lequel le liquide d'alcool brut est obtenu par fermentation et distillation de matières premières pour brassage dans une cave spécifique, sans subir de processus de mélange ou de malaxage ; la cave spécifique est l'une de multiples caves de fermentation pour brassage ayant différents niveaux de goût ou de saveur.

3. Ensemble d'emballage d'alcool brut comprenant une boîte d'emballage, dans lequel la boîte d'emballage est pourvue dans celle-ci d'au moins une bouteille de liquide de mélange d'alcool et d'au moins un emballage d'alcool brut selon la revendication 1 ou 2 ; la bouteille de liquide de mélange d'alcool contient un liquide de mélange d'alcool et est configurée pour fournir le liquide de mélange d'alcool à des consommateurs pour le mélange d'alcool.

4. Ensemble d'emballage d'alcool brut selon la revendication 3, dans lequel le liquide de mélange d'alcool comprend au moins l'un parmi un liquide d'alcool auxiliaire, un liquide sucré, un liquide d'assaisonnement ou un liquide d'épices comestibles.

5. Ensemble d'emballage d'alcool brut selon la revendication 4, dans lequel le liquide d'alcool auxiliaire est un liquide d'alcool mélangé ou malaxé qui est conforme à des normes nationales.

6. Ensemble d'emballage d'alcool brut selon la revendication 4 ou 5, dans lequel le liquide de mélange d'alcool comprend en outre de l'eau distillée.

7. Ensemble d'emballage d'alcool brut selon l'une quelconque des revendications 3 à 6, dans lequel la boîte d'emballage est pourvue dans celle-ci de multiples emballages d'alcool brut selon la revendication 1 ou 2, et le liquide d'alcool brut dans les différentes alcools bruts est conditionné à partir de la même cave de fermentation pour brassage.

8. Ensemble d'emballage d'alcool brut facilitant le mélange d'alcool selon l'une quelconque des revendications 3 à 7, dans lequel la boîte d'emballage est pourvue dans celle-ci de multiples emballages d'alcool brut selon la revendication 1 ou 2, et le liquide d'alcool brut dans les différentes alcools bruts est conditionné à partir de multiples caves de fermentation pour brassage ayant différents saveurs et goûts.

9. Ensemble d'emballage d'alcool brut selon l'une quelconque des revendications 3 à 8, comprenant en outre un dispositif de mélange d'alcool, dans lequel le dispositif de mélange d'alcool comprend de multiples billes de mélange d'alcool ou blocs de mélange d'alcool de différents volumes.

10. Ensemble d'emballage d'alcool brut selon la revendication 9, dans lequel le dispositif de mélange d'alcool comprend en outre un sachet de thé avec une ficelle, et le sachet de thé contient les billes de mélange d'alcool ou les blocs de mélange d'alcool.

11. Ensemble d'emballage d'alcool brut selon la revendication 9 ou 10, dans lequel le dispositif de mélange d'alcool est fabriqué en acier inoxydable de qualité alimentaire, et les blocs de mélange d'alcool ou les billes de mélange d'alcool contiennent un autre liquide de mélange d'alcool.

12. Ensemble d'emballage d'alcool brut selon l'une quelconque des revendications 3 à 11, dans lequel la paroi latérale externe de la bouteille d'alcool (11) est pourvue d'une pièce d'identification (13) ; la pièce d'identification (13) a au moins une identification de numéro de cave, une identification de teneur en alcool de cave, une identification de saveur, et des informations de grade de cave correspondant au liquide d'alcool brut sur celle-ci.

13. Ensemble d'emballage d'alcool brut selon la revendication 12, dans lequel la paroi latérale externe de la bouteille d'alcool (11) est en outre pourvue d'une pièce de couverture (14) ; la pièce de couverture (14) peut être retirée de la paroi latérale externe de la bouteille d'alcool (11), et la pièce de couverture (14) recouvre la pièce d'identification (13), de sorte que la pièce d'identification (13) soit invisible et qu'un style de dégustation à boîte mystère soit formé.

14. Ensemble d'emballage d'alcool brut selon la revendication 12 ou 13, dans lequel la pièce d'identification (13) est pourvue d'un identifiant numérique pour être scanné et identifié par des terminaux mobiles ; l'identifiant numérique est configuré pour être scanné par un terminal mobile et ainsi se connecter à un serveur cloud d'une distillerie ou d'un fournisseur, et pour charger des informations de cave correspondant au liquide d'alcool brut dans la bouteille d'alcool (11) vers le serveur cloud de la distillerie ou du fournisseur, de sorte que le serveur cloud de la distillerie ou du fournisseur envoie des cadeaux électroniques, des monnaies électroniques ou des informations de prix correspondant aux informations de cave au terminal mobile.

15. Procédé de mélange d'alcool, qui utilise l'ensemble d'emballage d'alcool brut selon l'une quelconque des revendications 3 à 14 ; dans lequel le procédé comprend : la réalisation (S101), par une cave, d'un processus de brassage, et l'obtention d'un liquide d'alcool brut qui n'a ni été mélangé ni malaxé ; la mesure (S102) une teneur du liquide d'alcool brut de la cave ; la mise en bouteille (S103) du liquide d'alcool brut de la cave ; la mise en bouteille (S104) du liquide d'alcool brut de la cave dans multiples bouteilles d'alcool (11) et le scellement ; la répartition (S105) des bouteilles d'alcool (11) scellées dans les boîtes d'emballage et la vente de celles-ci à des consommateurs ; la réalisation (S106), par les consommateurs, du mélange d'alcool selon les bouteilles d'alcool (11) ou leur propre expérience ; après dégustation de l'alcool, le balayage (S107), par les consommateurs, d'identifications numériques via des terminaux mobiles et l'accès à une application (APP) ; la réalisation (S108), par les consommateurs, d'une évaluation selon une page redirigée de l'application, et le chargement de solutions de mélange d'alcool ou le chargement de vidéos de mélange d'alcool vers un serveur cloud ; alternativement, le chargement simultané (S109), par une pluralité de consommateurs, de solutions de mélange d'alcool, l'organisation de concours de mélange d'alcool, le partage de solutions de mélange d'alcool et la vente de solutions de mélange d'alcool personnelles, formant ainsi une communauté culturelle de mélange d'alcool et de dégustation d'alcool ; selon le type de la cave, la réalisation (S110), par les consommateurs, de réservations en ligne pour des quantités d'achat et la génération de commandes de cave ; l'obtention (S111), par le serveur cloud, des commandes de cave, l'association à des solutions de mélange d'alcool personnelles et l'envoie à une distillerie ; le conditionnement (S112), par la distillerie, de l'ensemble d'emballage d'alcool brut selon les commandes de cave et les solutions de mélange d'alcool personnelles ; l'obtention (S113), par un consommateur, d'un ensemble d'emballage d'alcool brut envoyé par la distillerie qui répond à un goût de mélange d'alcool personnalisé de celle-ci..

16. Procédé de mélange d'alcool selon la revendication 15, dans lequel les consommateurs, selon le type de la cave et leurs propres solutions de mélange d'alcool personnelles ou d'autres solutions de mélange d'alcool personnelles divulguées par une communauté culturelle spécifiée de mélange d'alcool et de dégustation d'alcool, effectuent des réservations en ligne pour des quantités d'achat et génèrent des commandes de cave correspondant aux solutions de mélange d'alcool personnelles.

17. Procédé de mélange d'alcool selon la revendication 15 ou 16, dans lequel le procédé de mélange d'alcool est un procédé de mélange d'alcool pour une pluralité de bouteilles d'alcool de la même cave dans une boîte d'emballage.

18. Procédé de mélange d'alcool selon la revendication 15 ou 16, dans lequel le procédé de mélange d'alcool est un procédé de mélange d'alcool pour une pluralité de bouteilles d'alcool de différentes caves dans une boîte d'emballage.
